# EUROPEAN PATENT SPECIFICATION

(11) **EP 0 358 527 B1**
(45) Date of publication and mention of the grant of the patent: **20.01.1993**
(21) Application number: 89309145.4
(22) Date of filing: 08.09.1989
(51) Int. Cl.: A21D 2/14

(54) **Process for the preparation of free-flowing lactic acid compositions**
Verfahren zur Herstellung von fliessfähigen Milchsäure-Zusammensetzungen
Procédé de préparation de compositions d'acide lactique s'écoulant librement

(30) Priority: 09.09.1988 GB 8821138
(43) Date of publication of application: 14.03.1990
(73) Proprietor: UNILEVER PLC, London EC4P 4BQ (GB); UNILEVER N.V., 3013 AL Rotterdam (NL)
(72) Inventor: Geywitz, Peter, D-7900 Ulm-Wiblingen (DE)
(74) Representative: Dries, Antonius Johannes Maria

(56) References cited:
- EP-A- 0 271 735
- DE-A- 2 854 291
- DE-C- 159 948

## Description

This invention relates to a process for the preparation of free-flowing lactic acid compositions and particularly to the preparation of such compositions of edible quality which are suitable for use in formulations and recipes for food production.

Lactic acid is usually obtained as a syrupy liquid since both its racemic mixture and its optical isomers are hygroscopic. In its more concentrated form it is highly corrosive and there is said to be no cheap material available in which this acid can be successfully processed.

In its more dilute form, however, excessive water is introduced into compositions in which lactic acid is used. In order to overcome the problems associated with the use of diluted lactic acid compositions, EP 271,735 has proposed to extrude a mixture comprising a cereal component and at least 6 wt.% of an edible organic acid or a mixture of edible organic acids at an elevated temperature. The cereal component is preferably capable of absorbing liquid acid compositions. When liquids are used in the process, the water content of this cereal is at most 15 wt.%.

The extrusion is applied in order to obtain a homogeneous product. The mixing of the components is advantageously carried out immediately prior to the extrusion.

We have now found a novel process wherein the use of an extruder can be avoided and which leads to products that are very suitable for use in formulations and recipes for food production, in particular in dough compositions. The novel process therefore copes with the problem of the high water content of the acid composition while the use of sophisticated and expensive apparatus, such as extruders, can be omitted. Moreover, in this way the lactic acid is not subjected to the severe conditions of the extrusion.

The present invention provides a process for the preparation of a free-flowing lactic acid composition in which the lactic acid is supported on an edible, comminuted, water-insoluble, farinaceous or leguminous, innocuous carrier material having a water content of less than 5 wt.%, suitable for use in food recipes, in which a grain product is dried to a water content of less than 5 wt.% and 20-80 proportions by weight of the lactic acid having an acid value of at least 800 are absorbed on to the carrier, which process does not comprise an extrusion step subsequent to adsorption of lactic acid and results in a product having a combined water content of the acid and carrier below 25% of the total weight of the composition, more particularly from 5-15%. The acid preferably contains less than 20% of water, indicated by an acid value of 800 or more.

Although a wide range of proportions by weight of the acid and carrier may be used, for example 20-80 to 80-20 parts, it is preferred to use approximately equal parts by weight of the acid and carrier.

Furthermore, it is known from DE 2,854,291 how to prepare a powdered baking composition comprising the mixing of a basic composition, 80% lactic acid, a Ca-compound and a water-binding compound, wherein the components are mixed in amounts such that a free-flowing powder is obtained. However, in this reference nothing is disclosed about diluted lactic acid compositions and how problems relating to their high water content are to be overcome.

The carrier may be any water-insoluble innocuous material of low water sensibility and of a farinaceous or leguminous nature. Suitable examples include bran, oats, barley, corn and grain products generally. These are pre-dried to a water content of less than 5% or more particularly approximately 1%. Suitable carriers from such sources may be obtained by extrusion at denaturation temperatures from approximately 100°-250°C and in the presence of a small amount of water. The expanded farinaceous product thus formed may exhibit a substantially lower water content of the order of 5% or less and may be used as a carrier in the products of the present invention. A particularly suitable method of extrusion is described in European patent specification 303,460.

By means of the invention, lactic acid may be introduced as an ingredient in food processing, without importing excessive amounts of water. The concentrated lactic acid may also be handled without difficulty in its absorbed condition on the carrier. The product of the process according to the invention is a bread improver capable of inhibiting the onset of staling in baked good and may be included in dough compositions in an amount of, for example, 1-5% by weight.

## Claims

1. Process for the preparation of a free-flowing lactic acid composition in which the lactic acid is supported on an edible, comminuted, water-insoluble, farinaceous or leguminous, innocuous carrier material having a water content of less than 5 wt.%, characterized by drying a grain product to a water content of less than 5% and adsorbing thereon from 20 to 80 proportions by weight of lactic acid having an acid value of at least 800, which process does not comprise an extrusion step subsequent to adsorption of lactic acid, and wherein a product having a combined water content of the acid and carrier below 25 wt.% is obtained.

2. Process according to Claim 1, in which the combined water content is from 5 to 15%.

3. Process according to Claim 1, wherein approximately equal parts of acid and carrier are used.

## Patentansprüche

1. Verfahren zur Herstellung einer fließfähigen Milchsäure-Zusammensetzung, wobei die Milchsäure an einem eßbaren, zerkleinerten, wasserunlöslichen, mehlartigen oder leguminosen, harmlosen, einen Wassergehalt von weniger als 5 Gew.% aufweisenden Trägermaterial gebunden ist, **gekennzeichnet durch** Trocknen eines Kornproduktes auf einen Wassergehalt von weniger als 5% und anschließendes darauf Adsorbieren von 20 bis 80 Gewichtsteilen einer eine Säurezahl von mindestens 800 besitzenden Milchsäure, wobei bei diesem Verfahren nach dem Adsorbieren der Milchsäure kein Extrusionsschritt folgt und wobei ein Produkt mit einem Gesamtwassergehalt der Säure und des Trägers unter 25 Gew.% erhalten wird.

2. Verfahren gemäß Anspruch 1, wobei der Gesamtwassergehalt 5 bis 15% beträgt.

3. Verfahren gemäß Anspruch 1, wobei annähernd gleiche Teile Säure und Träger verwendet werden.

## Revendications

1. Procédé de préparation d'une composition à écoulement libre d'acide lactique dans laquelle l'acide lactique est supporté sur un véhicule inoffensif,comestible, finement broyé, farineux ou légumineux, insoluble dans l'eau ayant une teneur en eau de moins de 5% en poids, caractérisé en ce qu'on sèche un produit en grains jusqu'à une teneur en eau inférieure à 5% et on fait adsorber sur ce produit de 20 à 80 proportions en poids d'acide lactique ayant un indice d'acide d'au moins 800, procédé qui ne comporte pas de stade d'extrusion après l'adsorption d'acide lactique, et dans lequel on obtient un produit ayant une teneur combinée en eau dans l'acide et le véhicule au dessous de 25% en poids.

2. Procédé selon la revendication 1, dans lequel la teneur combinée en eau est de 5 à 15% en poids.

3. Procédé selon la revendication 1, dans lequel on utilise des parties à peu près égales d'acide et de véhicule.
